**Europäisches Patentamt**

**European Patent Office**

**Office européen des brevets**

(11) Veröffentlichungsnummer: **0 023 654**
A1

## (12) EUROPÄISCHE PATENTANMELDUNG

(21) Anmeldenummer: **80104244.1**

(22) Anmeldetag: **18.07.80**

(51) Int. Cl.³: **E 06 B 7/16**, B 65 G 69/00

(30) Priorität: **26.07.79 DE 2930295**

(43) Veröffentlichungstag der Anmeldung: **11.02.81** Patentblatt 81/6

(84) Benannte Vertragsstaaten: **AT BE CH FR GB LI NL SE**

(71) Anmelder: **Reiff GmbH, Tübinger Strasse 4, D-7410 Reutlingen (DE)**

(72) Erfinder: **Votteler, Hans, Moselstrasse 36, D-7140 Reutlingen 25 (Altenburg) (DE)**

(74) Vertreter: **Möbus, Rudolf, Dipl.-Ing., Hindenburgstrasse 65, D-7410 Reutlingen (DE)**

(54) **Abdichteinrichtung für Verladetore.**

(57) Die Erfindung betrifft eine Abdichteinrichtung für verschließbare Verladetore an Gebäuden. Die Abdichteinrichtung dient zum Schließen der Spalte zwischen der Türöffnung und den Wandungen eines vor dem Verladetor stehenden Fahrzeugs oder Containers. Als Dichtungslamellen werden drei durchgehende Gummiwandungsteile (18, 19, 20) verwendet, die jeweils an einer rohrförmigen Schließfedervorrichtung (15, 16) befestigt sind und somit unter Federspannung nach außen gegen die Innenwandung des Containers ausschwenkbar sind. Um auch eine einwandfreie Abdichtung an den Übergangsstellen der Gummiwandungsteile zu erhalten, ist der obere Gummiwandungsteil (20) mit über die oberen Ränder der beiden seitlichen Gummiwandungsteile (18, 19) überstehenden freien und flexiblen Endabschnitten (20.1, 20.2) versehen.

ACTORUM AG

## Abdichteinrichtung für Verladetore

Die Erfindung betrifft eine Abdichteinrichtung für verschließbare Verladetore an Gebäuden, mit am Umfang der Toröffnung angeordneten äußeren, unter Federspannung gegen einen vor das Tor gebrachten Container o. dgl. anlegbaren Dichtungslamellen aus elastischem Material.

Bisher bekannte Abdichteinrichtungen dieser Art bestehen aus Gummihohlwülsten, die rings um ein Verladetor auf die Außenwandung eines Gebäudes aufgebracht sind und gegen welche ein Container mit seiner Öffnungsseite oder gegen welchen ein LKW mit der hinteren Stirnseite seines Laderaumes angedrückt wird. Es sind auch über die Verladetore vorgebaute Kasten mit flexiblen, durch Federstahlbänder versteiften Gummiwandungen bekannt, in welche ein Lastkraftwagen oder ein Container mit seiner Öffnungsseite unter Einbiegung der flexiblen Wandungen angefahren wird. Auch ist es bekannt, die flexiblen Wandungen in mehrere einzelne, parallel zueinander angeordnete Lamellen aufzugliedern, die eine bessere Anpassung der Wandungen an die Außenkonturen der Container o. dgl. erbringen sollen. Bei allen bekannten Abdichteinrichtungen erfolgt die Abdichtung zwischen den Gummiwandungen oder Lamellen und einer Außenfläche oder einem Außenrand der vor das Tor gebrachten Container. Dort ist die Abdichtung aber in den meisten Fällen nur unzureichend, weil die Container meist mit nach außen klappbaren Schwingtoren auf ihrer Ladeseite versehen sind und eine vollständige Abdichtung zwischen den aufgeklappten Schwingtoren und dem Verladetorrand durch gegen diese Schwingtore oder ihre Ränder anliegende Dichtungslamellen kaum möglich ist. Ein weiterer Nachteil der bekannten Abdichteinrichtungen besteht darin, daß die Dichtungslamellen durch die Anlage gegen die Außenseite von Ladeaufbauten von Lastkraftwagen häufig mit freiliegenden Scharnieren der Türen oder anderen Vorsprüngen in Berührung kommen. Im Laufe des Beladens oder Entladens der Fahrzeuge kommt es zu Höhenverstellungen der Ladefläche des Fahrzeugs durch Be- oder Entlastung der Fahrzeugfedern. Durch diese Höhenverstellbewegungen können sich an Vorsprüngen des Fahrzeuges verhakende Lamellen abgerissen werden.

Der Erfindung liegt die Aufgabe zugrunde, eine Abdichteinrichtung der eingangs genannten Art so auszubilden, daß eine bessere Abdichtung als bei bisher bekannten Einrichtungen dieser Art gewährleistet ist.

Die gestellte Aufgabe wird mit einer Abdichteinrichtung der eingangs genannten Art erfindungsgemäß dadurch gelöst, daß die Dichtungslamellen aus drei durchgehenden Gummiwandungsteilen bestehen, die jeweils entlang eines ihrer Längsränder an einer rohrförmigen, in einer Spannstellung verriegelbaren Schließfedervorrichtung befestigt sind, von denen zwei jeweils an den beiden Seitenrändern und eine am oberen Querrand der Toröffnung drehbar gelagert sind, dergestalt, daß die Gummiwandungen aus der Toröffnungsebene unter Federspannung nach außen gegen die Innenwandung des Containers ausschwenkbar sind, und daß der obere Gummiwandungsteil über die oberen Ränder der beiden seitlichen Gummiwandungsteile überstehende freie und flexible Endabschnitte aufweist. Die oberen und unteren Endbereiche der beiden seitlichen Gummiwandungsteile können vorteilhafterweise stauchbar ausgebildet sein, während die Mittelbereiche der Gummiwandungsteile zweckmäßig durch Einlagen versteift sind.

Die den Laderaum begrenzenden Innenwandungen von Containern und Kastenaufbauten von Lastkraftwagen sind allgemein bis zur abzudichtenden Öffnung glatt und ohne scharfkantige Vorsprünge ausgebildet. Dadurch ist durch die sich gegen diese Innenwandungen anlegenden Gummiwandungsteile auch eine gute Abdichtung gewährleistet. Die nach dem Prinzip von Pendeltüren verschwenkbar angeordneten Dichtungslamellen erlauben einen guten Ausgleich von Breiten- und Höhendifferenzen zwischen der Toröffnung und der Öffnung eines zu beladenden Containers. Beim Ausschwenken der Gummiwandungsteile aus der Toröffnungsebene werden die überstehenden Endbereiche des oberen Gummiwandungsteiles durch die oberen Ränder der seitlichen Gummiwandungsteile in die oberen Ecken des Containerinnenraums eingedrückt, so daß auch dort eine gute Abdichtung erfolgt. Eine Abdichtung durch Gummiwandungsteile im Bodenbereich der Toröffnung ist nicht vorgesehen, weil hier durch Überladebrücken oder Überfahrbleche die Abdichtung bewirkt werden kann.

Erfindungsgemäß ausgebildete Abdichteinrichtungen lassen auch eine Vertikalverschiebung des abzudichtenden Behälters im Rahmen einer Federbelastung oder Federentlastung eines Fahrzeuges zu, ohne daß hierbei eine Beschädigung der Gummiwandungsteile befürchtet werden muß. Die Endbereiche der Gummiwandungsteile sind alle so stark flexibel und vorzugsweise auch stauchbar ausgebildet, so daß die Seitenwandungsteile die hier auftretenden Höhendifferenzen während des Beladens oder Entladens ohne Schwierigkeiten und ohne die Gefahr eines Abreißens der Wandungsteile mitmachen können. Für den oberen Gummiwandungsteil bedeutet eine Höhenverstellung lediglich eine Änderung seiner Schwenklage. Die erfindungsgemäß ausgebildete Abdichteinrichtung läßt sich in einer Ruhestellung, in welcher die Gummiwandungsteile in der Toröffnungsebene liegen, bei gespannter Schließfedervorrichtung verriegeln. Die Abdichteinrichtung wird erst in ihre Betriebsstellung gebracht, wenn ein zu beladender Container oder ein zu beladendes Fahrzeug vor dem Verladetor zum Stehen gekommen ist. Beschädigungen beim Anfahren der Fahrzeuge oder Container an die Verladetore müssen also bei einer erfindungsgemäß ausgebildeten Abdichteinrichtung nicht befürchtet werden.

Mit einer erfindungsgemäß ausgebildeten Abdichteinrichtung wird ein wirkungsvoller Wetterschutz erzielt und lassen sich Verluste an Heizungswärme in den mit den Verladetoren versehenen Lagerhallen oder Fabrikationsstätten in wirtschaftlichen Grenzen halten.

Nachfolgend wird ein Ausführungsbeispiel einer erfindungsgemäß ausgebildeten Abdichteinrichtung anhand der beiliegenden Zeichnung näher erläutert.

Im einzelnen zeigen:

Fig. 1          eine Draufsicht auf ein mit einer Abdichteinrichtung versehenes Verladetor bei geschlossenem Tor und in Ruhestellung befindlichen Dichtungswandungen;

Fig. 2 einen Blick aus einem Container auf das geöffnete Verladetor mit der Abdichteinrichtung in ihrer Wirkstellung;

Fig. 3 eine Schrägbilddarstellung der in ihrer Betriebsstellung befindlichen Abdichteinrichtung.

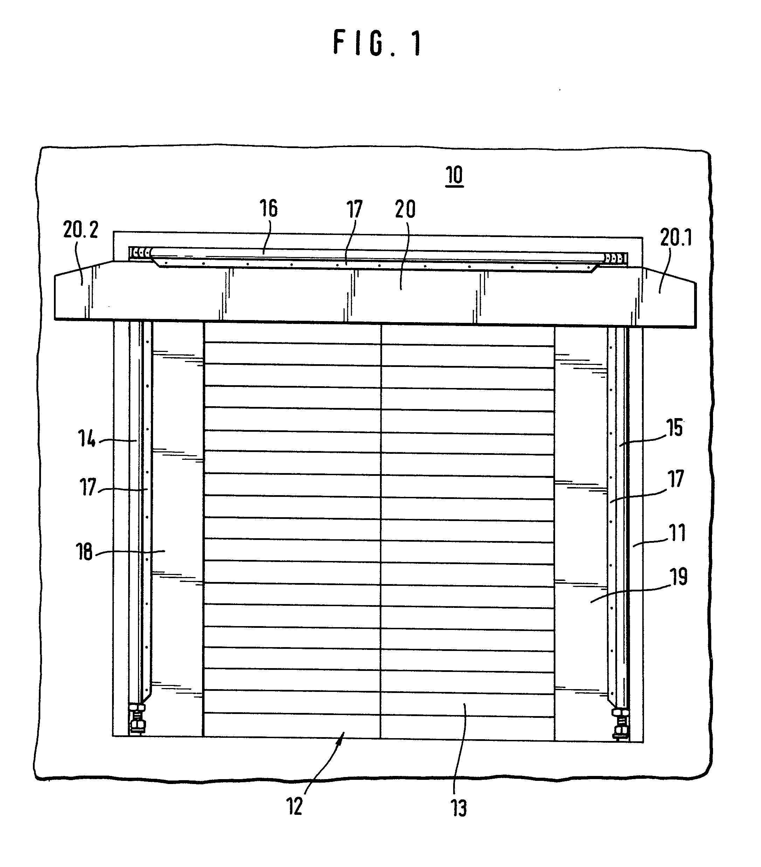

Fig. 1 zeigt eine Gebäudewandung 10 mit einem durch einen Außenrahmen 11 begrenzten Verladetor 12, das durch einen Rolladen 13 verschlossen ist. Entlang der beiden seitlichen Ränder und entlang des oberen Randes des Begrenzungsrahmens 11 sind rohrförmige Schließfedervorrichtungen 14, 15 und 16 jeweils um ihre Längsachse drehbar gelagert. Solche Schließfedervorrichtungen sind von Pendeltüren her bekannt und beispielsweise in dem deutschen Patent 22 07 190 der Anmelderin beschrieben. An dem drehbaren Außenrohr der Schließfedervorrichtungen 14, 15 und 16 ist jeweils eine Längsleiste 17 angebracht, an welcher ein Längsrand einer Gummiwandung 18, 19 oder 20 befestigt ist.

Fig. 1 zeigt die Gummiwandungen 18, 19 und 20 in die Ebene des Verladetores 12 einwärts geklappt. In dieser Stellung können die rohrförmigen Schließvorrichtungen 14, 15 und 16 unter Federspannung verriegelt werden. Die Verriegelungsvorrichtung läßt sich auf verschiedene Weise konstruktiv gestalten. Sie ist nicht dargestellt, weil sie nicht erfindungswesentlich ist.

Fig. 1 läßt erkennen, daß die Längsstege 17 und damit die Befestigungsstellen der Gummiwandungen 18, 19 und 20 nicht bis zu den Enden der Gummiwandungen führen, so daß alle Gummiwandungen im Bereich ihrer Enden frei beweglich sind. Dabei überragen die beiden Endabschnitte 20.1 und 20.2 der oberen Gummiwandung 20 die von dieser Gummiwandung in der dargestellten Ruhestellung überdeckten oberen Enden der beiden seitlichen Gummiwandungen 18 und 19 beträchtlich. Im Bereich ihrer Endabschnitte sind alle Gummiwandungen 18 - 20 flexibler als in ihrem Mittelbereich ausgebildet. In ihrem Mittelbereich können die Gummiwandungen 18 - 20 durch nicht dargestellte Gewebeeinlagen versteift sein.

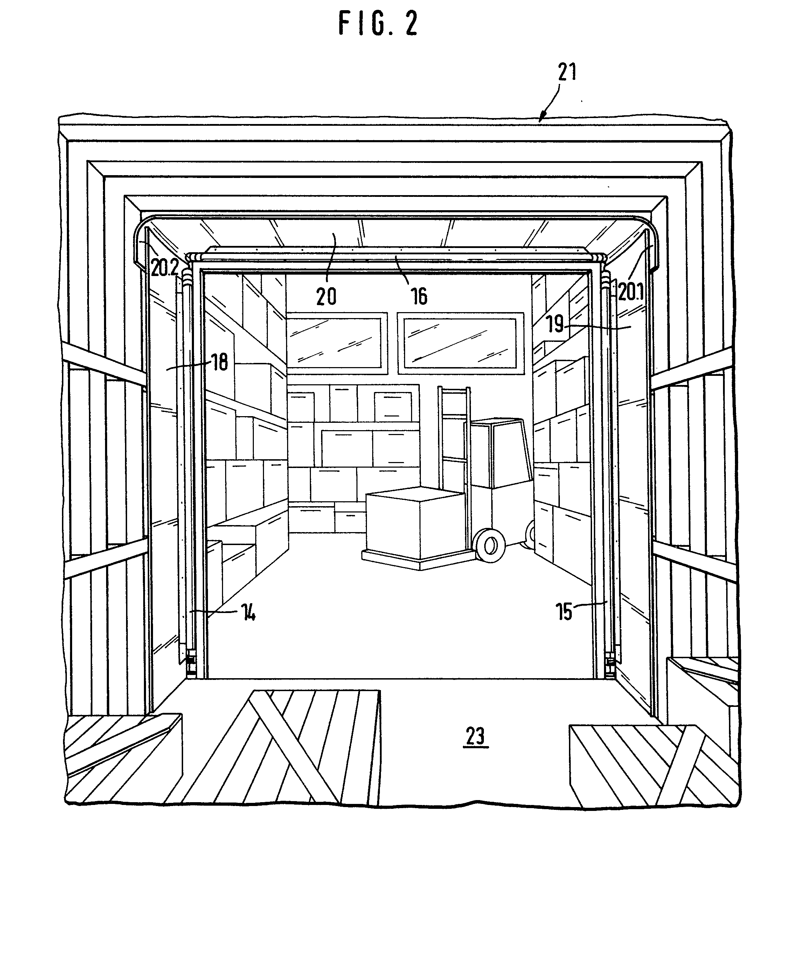

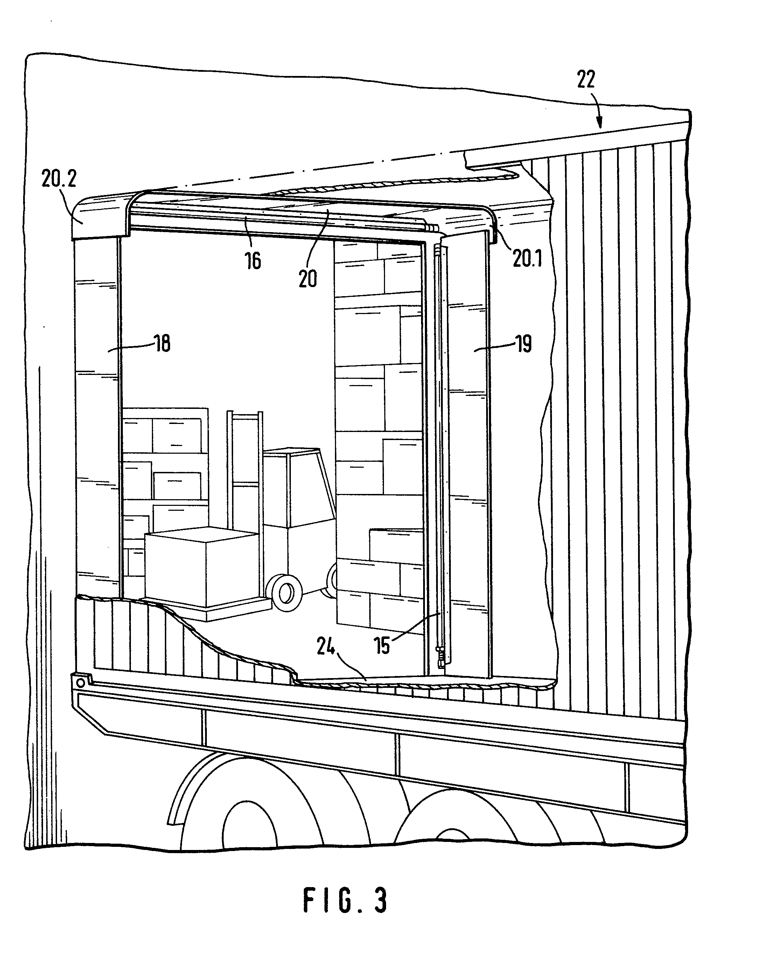

Nachdem ein Container 21 (Fig. 2) oder ein Kastenwagen 22 (Fig. 3) mit ihrer durch Ausschwenken von Flügeltüren auf die Außenseite der Seitenwandungen geöffneten hinteren Stirnseite gegen das Verladetor gefahren worden ist, wird der Rolladen 13 des Verladetores 12 geöffnet und werden die rohrförmigen Schließfedervorrichtungen 14, 15 und 16 der Abdichteinrichtung entriegelt. Daraufhin werden die Gummiwandungen 18 - 20 durch die Schließfedervorrichtungen 14 - 16 aus der Verladetorebene nach auswärts und in den Container 21 oder den Kastenwagen 22 hinein verschwenkt, wobei sie in dichte Anlage gegen die glatten Innenwandungen des Containers 21 oder des Kastenwagens 22 gelangen, wie die Fig. 2 und 3 anschaulich zeigen. Dabei werden die Endabschnitte 20.1 und 20.2 des oberen Gummiwandungsteiles 20 abgebogen und durch die oberen Ränder der seitlichen Gummiwandungsteile 18 und 19 gegen die Innenwandung des Containers 21 oder des Kastenwagens 22 gedrückt. Insgesamt ergibt sich dadurch eine gute Abdichtung zwischen dem Rand des Verladetores 12 und dem Container 21 oder dem Kastenwagen 22, so daß keine Kaltluft am Rande der Verladetore 12 ins Innere des Gebäudes dringen kann. Der zwischen dem Containerboden 23 oder der Ladeplattform 24 des Kastenwagens 22 und der Verladetoröffnung bestehende Spalt wird durch eine in der Zeichnung nicht dargestellte Überfahrbrücke abgedeckt.

In den meisten Fällen sind die Querschnitte der Verladetore und die Öffnungsquerschnitte von Kastenwagen und Containern aufeinander abgestimmt. Dies gilt vor allem für die Höhenabmessungen. Abweichungen in den Breitenabmessungen lassen sich durch die seitlichen Gummiwandungsteile 18 und 19 überbrücken, deren Breite entsprechend gewählt ist und die bei abweichenden Abmessungen geringer oder stärker als 90° aus der in Fig. 1 dargestellten Ruhelage verschwenkt werden.

Patentansprüche:

1. Abdichteinrichtung für verschließbare Verladetore an Gebäuden, mit am Umfang der Toröffnung angeordneten äußeren, unter Federspannung gegen einen vor das Tor gebrachten Container o. dgl. anlegbaren Dichtungslamellen aus elastischem Material, dadurch gekennzeichnet, daß die Dichtungslamellen aus drei durchgehenden Gummiwandungsteilen (18, 19, 20) bestehen, die jeweils entlang eines ihrer Längsränder an einer rohrförmigen, in einer Spannstellung verriegelbaren Schließfedervorrichtung (14, 15, 16) befestigt sind, von denen zwei Schließfedervorrichtungen (14, 15) jeweils an den Seitenrändern und eine Schließfedervorrichtung (16) am oberen Querrand der Toröffnung drehbar gelagert sind, dergestalt, daß die Gummiwandungsteile (18 - 20) aus der Toröffnungsebene unter Federspannung nach außen gegen die Innenwandung des Containers (21) ausschwenkbar sind, und daß der obere Gummiwandungsteil (20) über die oberen Ränder der beiden seitlichen Gummiwandungsteile (18, 19) überstehende freie und flexible Endabschnitte (20.1, 20.2) aufweist.

2. Abdichteinrichtung nach Anspruch 1, dadurch gekennzeichnet, daß die oberen und unteren Endbereiche der beiden seitlichen Gummiwandungsteile (18, 19) stauchbar ausgebildet sind.

3. Abdichteinrichtung nach Anspruch 1 und/oder 2, dadurch gekennzeichnet, daß die Mittelbereiche der Gummiwandungsteile (18 - 20) durch Einlagen versteift sind.

# FIG. 1

FIG. 2

0023654

FIG. 3

Europäisches
Patentamt

**EUROPÄISCHER RECHERCHENBERICHT**

0023654

Nummer der Anmeldung

EP 80 10 4244.1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CH – A5 – 576 580 (GEBR. FRECH AG.) <br> * Spalte 2, Zeilen 6 bis 40 * <br> --- | 1 |
| | US – A – 3 638 667 (C.P. FROMMELT et al.) <br> * Spalte 3, Zeile 67 bis Spalte 4, Zeile 18 * <br> -- | 1 |
| A | DE – A – 2 203 581 (I. TOTLAND) <br> * Fig. 1 * <br> --- | 1 |
| A | DE – U – 7 504 902 (K. ALTEN) <br> * Fig. 1, 2 * <br> -- | 1 |
| A | DE – U – 7 425 832 (SCHIEFFER & CO.) <br> * Anspruch 2 * <br> --- | 1 |
| A | US – A – 3 875 954 (C.P. FROMMELT et al.) <br> * Fig. 4 * <br> -- | 1 |
| A | US – A – 3 797 165 (A.J. KOCHIS) <br> * Spalte 1, Zeile 33 bis Spalte 2, Zeile 4 * <br> -- | 1 |
| A | US – A – 3 557 508 (C.P. FROMMELT et al.) <br> * Spalte 3, Zeilen 17 bis 23; Fig. 1 * <br> ---- | 2,3 |

**KLASSIFIKATION DER ANMELDUNG (Int.Cl.³)**

E 06 B 7/16
B 65 G 69/00

**RECHERCHIERTE SACHGEBIETE (Int. Cl.³)**

B 65 G 69/00
E 06 B 3/00
E 06 B 7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 04-11-1980 | WUNDERLICH |

EPA form 1503.1 06.78